(19) Europäisches Patentamt / European Patent Office / Office européen des brevets

(11) **EP 4 113 232 A1**

(12) **EUROPÄISCHE PATENTANMELDUNG**

(43) Veröffentlichungstag:
**04.01.2023 Patentblatt 2023/01**

(21) Anmeldenummer: **22160203.0**

(22) Anmeldetag: **04.03.2022**

(51) Internationale Patentklassifikation (IPC):
**G05B 19/418** (2006.01)    **H04L 67/12** (2022.01)

(52) Gemeinsame Patentklassifikation (CPC):
**H04L 67/12; G05B 19/41865; G05B 19/41885**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.07.2021 DE 102021117097**

(71) Anmelder: **IMA Schelling Deutschland GmbH**
**32312 Lübbecke (DE)**

(72) Erfinder:
• **Rische, Stefan**
  **32257 Bünde (DE)**
• **Tiemeyer, Eckhard**
  **32312 Lübbecke (DE)**
• **Wall, Eduard**
  **32049 Herford (DE)**

(74) Vertreter: **Schober, Mirko**
**Thielking & Elbertzhagen**
**Patentanwälte**
**Gadderbaumer Strasse 14**
**33602 Bielefeld (DE)**

(54) **VERFAHREN ZUR PROZESSOPTIMIERUNG VON HOLZVERARBEITUNGSANLAGEN**

(57) Bei dem Verfahren zur Prozessoptimierung von Holzverarbeitungsanlagen (400) ist eine Holzverarbeitungsanlage (400) durch Auswählen der Funktionssegmente (414, 422, 432) vorkonfiguriert, die von einem Werkstück (10) durchlaufen werden können. Jedes Funktionssegment ist ein Element aus folgender Gruppe: i) Bearbeitungsvorrichtung, ii) Transportvorrichtung, iii) Manipulationsvorrichtung, iv)) Puffervorrichtung, v) Zuführ-/Entnahmevorrichtung. Es werden folgende Schritte ausgeführt:

a) Bereitstellen einer Bibliothek (100) mit für jedes der Funktionssegmente (414, 422, 432) repräsentativen Informationen (14, 22, 32) über das Verhalten, insbesondere über die Verweilzeit, des Werkstücks (10) im jeweiligen Funktionssegment (414, 422, 432),

b) Auswählen der für die Funktionssegmente (414, 422, 432) repräsentativen Informationen (14, 22, 32);

c) Simulieren eines Werkstücktransports durch die die Holzverarbeitungsanlage (400) bildenden Funktionssegmente (414, 422, 432) anhand von einer Bibliothek mit gespeicherten Daten über das Verhalten von Werkstcken (10) beim Durchlauf durch Funktionssegmente (414, 422, 432) und Erzeugen von Simulationsdaten;

d) Ermitteln optimierter Prozessparameter zum Betrieb der aus den Funktionselementen (414, 422, 432) gebildeten Holzverarbeitungsanlage (400).

Fig. 1

EP 4 113 232 A1

**Beschreibung**

Die Erfindung betrifft ein Verfahren zur Prozessoptimierung von Holzverarbeitungsanlagen.

In der Holzverarbeitungsindustrie spielt die Prozessoptimierung eine wichtige Rolle. Holzverarbeitungsanlagen sind komplexe Gebilde, sodass die Prozessoptimierung entsprechend komplex ist.

Aufgabe der vorliegenden Erfindung ist es, ein Verfahren zur Prozessoptimierung von Holzverarbeitungsanlagen anzugeben, mit welchem sich die Prozessoptimierung auch in komplexen Systemen wie Holzverarbeitungsanlagen verbessern lässt.

Gelöst wird diese Aufgabe durch ein Verfahren mit den Merkmalen des Anspruchs 1. Vorteilhafte Ausführungsformen finden sich in den Unteransprüchen.

Die Erfindung geht von der Überlegung aus, dass Holzverarbeitungsanlagen über eine ganze Reihe von Funktionssegmenten verfügen. Das können zum Beispiel Bearbeitungsvorrichtungen wie Fräser, Sägen, Bekantungsaggregate oder aber Transportvorrichtungen, Manipulationsvorrichtungen, Speicher- oder Puffervorrichtungen, Zuführvorrichtungen oder Entnahmevorrichtungen sein. Diese Funktionssegmente müssen einlaufende Werkstücke, in der Regel plattenförmige Werkstücke aus Holz oder Holzersatzstoffen, in einer bestimmten Weise verarbeiten. Entsprechend weisen solche Funktionssegmente für das jeweilige Funktionssegment charakteristische Eigenschaften auf. Diese charakteristischen Eigenschaften können dem Betreiber der Holzverarbeitungsanlage Informationen darüber zur Verfügung stellen, wie in dem entsprechenden Funktionssegment mit dem entsprechenden Werkstück umgegangen wird. Insbesondere enthalten solche Informationen Angaben über die Verweilzeit eines Werkstücks innerhalb des entsprechenden Funktionssegmentes oder beispielsweise die Zahl der Werkstücke, die innerhalb eines Funktionssegmentes gleichzeitig aufgenommen werden können. Natürlich können die entsprechenden Funktionssegmente weitere charakteristische Eigenschaften haben.

Die Beschaffenheit und charakteristischen Eigenschaften solcher Funktionssegmente von Holzverarbeitungsanlagen haben dabei Einfluss auf die Prozesssteuerung innerhalb der Holzverarbeitungsanlage.

Aufgrund dieser Überlegungen wird ein Verfahren zur Prozessoptimierung von Holzverarbeitungsanlagen vorgeschlagen, bei welchem eine Holzverarbeitungsanlage aus einer Mehrzahl Funktionssegmenten gebildet ist oder durch Auswählen der Funktionssegmente vorkonfiguriert wird, die von einem Werkstück durchlaufen werden können. Jedes Funktionssegment ist dabei ein Element aus folgender Gruppe:

i) Bearbeitungsvorrichtung,
ii) Transportvorrichtung,
iii) Manipulationsvorrichtung,
iv) Puffervorrichtung,
v) Zuführ-/Entnahmevorrichtung,

Beim erfindungsgemäßen Verfahren werden folgende Schritte ausgeführt:

a) Bereitstellen einer Bibliothek mit für jedes der Funktionssegmente repräsentativen Informationen über das Verhalten, insbesondere über die Verweilzeit, des Werkstücks im jeweiligen Funktionssegment,
b) Auswählen der für die Funktionssegmente repräsentativen Informationen;
c) Simulieren eines Werkstücktransports durch die die Holzverarbeitungsanlage bildenden Funktionssegmente und Erzeugen von Simulationsdaten;
d) Ermitteln optimierter Prozessparameter zum Betrieb der aus den Funktionselementen gebildeten Holzverarbeitungsanlage.

Die Simulation in Schritt c) wird insbesondere anhand von einer Bibliothek mit gespeicherten Daten durchgeführt, die Informationen über das Verhalten von Werkstücken beim Durchlauf durch Funktionssegmente aufweisen.

Erfindungsgemäß werden also die charakteristischen Eigenschaften der Funktionssegmente, die eine tatsächliche Maschine oder bevorzugt eine theoretische Maschine bilden, in Form von Informationen in einer Bibliothek erfasst und zur Optimierung herangezogen. Auf diese Weise lassen sich also tatsächliche Maschinen in ihrem Verhalten simulieren oder noch zu bauende Maschinen konzipieren und im Hinblick auf den zu erwartenden Betrieb auslegen. Bevorzugt kann vorgesehen sein, dass bei dem erfindungsgemäßen Verfahren weiter folgende Schritte ausgeführt werden:

e) Konzipieren einer noch zu bauenden Holzverarbeitungsanlage und
f) Auslegen der Holzverarbeitungsanlage auf den zu erwartenden Betrieb.

Durch dieses erfindungsgemäße Verfahren ist es möglich, eine noch zu bauende Anlage virtuell zu konzipieren und deren Eigenschaften beim Durchlauf von Werkstücken anhand der in einer Bibliothek zu virtuellen Funktionssegmenten gespeicherten Daten zu simulieren, ohne eine tatsächliche Anlage oder Komponenten der Anlage bauen zu müssen.

Vorteilhafterweise ist vorgesehen, dass die optimierten Prozessparameter in einer Speichereinrichtung gespeichert werden. Diese Prozessparameter stehen dann für weitere Berechnungen oder Optimierungs- oder Steuerungsschritte zur Verfügung.

Aufgrund der in Schritt d) ermittelten Prozessparameter kann eine reale Holzverarbeitungsanlage gesteuert werden. Insbesondere kann in einer aus den oben genannten Funktionssegmenten ausgebildeten Holzverarbeitungsanlage die Förderung von Werkstücken durch die Anlage gesteuert werden. Zum Beispiel kann der Abstand von nacheinander in die Anlage gelangenden Werkstücken optimiert werden. Üblicherweise ist es so, dass jedes Funktionssegment eine bestimmte Durchlaufzeit für das betreffende Werkstück benötigt. Unter Umständen ist es möglich, dass verschieden große Werkstücke unterschiedliche Durchlaufzeiten in den einzelnen Funktionssegmenten aufweisen. Dies führt dazu, dass in einem nicht optimierten Betrieb, bei dem eingangs der Holzverarbeitungsanlage Werkstücke in gleichen Abständen aufgegeben werden, die Werkstücke beim Durchlaufen der einzelnen Funktionssegmente zusammenrücken, möglicherweise sogar miteinander kollidieren können, oder der Abstand zwischen den einzelnen Werkstücken sich vergrößert. Beides geht zulasten der Leistungsfähigkeit der aus den Funktionssegmenten zusammengesetzten Anlage.

Bevorzugt ist deshalb vorgesehen, dass in Schritt d) als Prozessparameter ein minimaler Abstand zweier aufeinander folgender Werkstücke ermittelt wird. Dieser minimale Abstand sorgt dafür, dass die aus den einzelnen Funktionssegmenten gebildete Holzverarbeitungsanlage maximal ausgelastet wird, da dadurch die maximale Anzahl von Werkstücken pro Zeit die Anlage durchläuft.

Alternativ oder ergänzend kann vorgesehen sein, dass in Schritt d) als Prozessparameter Werte ermittelt werden, die der Optimierung der Durchsatzmenge aufeinander folgender Werkstücke oder Werkstückfolgen dienen. Das kann wie beschrieben dadurch geschehen, dass der Abstand zweier aufeinanderfolgender Werkstücke minimiert wird. Gerade aber bei nicht in Serie, sondern parallelgeschalteten Funktionssegmenten kann die Durchsatzmenge nicht nur vom minimalen Abstand abhängen, sondern beispielsweise auch von der Auswahl der Werkstücke. Beispielsweise können Werkstücke nach einem bestimmten, optimierten Verteilungsschlüssel den einzelnen Funktionssegmenten zugewiesen werden.

Schließlich kann alternativ oder ergänzend bei der Steuerung der Förderung von Werkstücken durch die Holzverarbeitungsanlage eine Anpassung der Bearbeitungsparameter auf Grundlage der Werkstückparameter erfolgen. Werkstückparameter sind in diesem Zusammenhang zunächst einmal die äußeren Abmessungen der Werkstücke, wie auch Material oder sonstige physikalische Eigenschaften. Es kann für die Optimierung des Prozesses beispielsweise eine Rolle spielen, in welcher Orientierung die Werkstücke durch die einzelnen Funktionssegmente der Holzverarbeitungsanlage geführt werden.

Die Erfindung wird nachfolgend anhand der Figuren 1 bis 5 näher erläutert.

Figur 1 ist eine schematische Darstellung einer erfindungsgemäßen realen oder virtuellen Holzverarbeitungsanlage mit einer Mehrzahl Funktionssegmente.

Figur 2 zeigt eine schematische Abbildung der Simulation einer erfindungsgemäßen Holzverarbeitungsanlage anhand von aus einer Bibliothek ausgewählten Funktionssegmenten.

Die Figuren 3 bis 5 zeigen Weg-Zeit-Diagramme zur Veranschaulichung eines erfindungsgemäßen Verfahrens am Beispiel der Optimierung des Abstands aufeinanderfolgender Werkstücke.

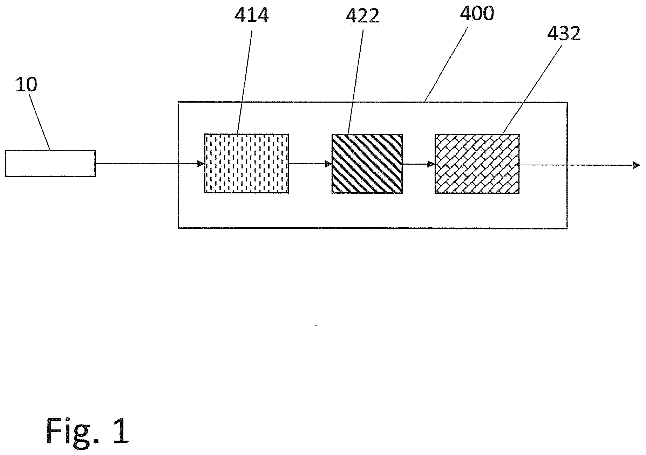

In Figur 1 ist eine reale Holzverarbeitungsanlage 400 als Schema dargestellt. Die Erfindung ist in der Lage, anhand von einer Bibliothek mit gespeicherten Daten über das Verhalten von Werkstücken 10 beim Durchlauf durch Funktionssegmente 414, 422, 432, aus denen eine Holzverarbeitungsanlage 400 gebildet werden kann (in Fig. 1 sind lediglich drei solcher Funktionssegmente dargestellt), den Durchlauf eines Werkstücks 10 durch eine gesamte Holzverarbeitungsanlage 400 zu simulieren. Dabei besteht zum einen die Option, eine bereits bestehende Holzverarbeitungsanlage 400 mithilfe der dort real vorhandenen Funktionssegmente 414, 422, 432 und der Bibliothek mit gespeicherten Daten zu den einzelnen Funktionssegmenten zu simulieren und so den Prozess zu optimieren. Zum anderen kann bei der Neukonzeption noch nicht vorhandener Anlagen eine virtuelle Holzverarbeitungsanlage durch Kombinieren verschiedener Funktionssegmente zusammengestellt und simuliert werden.

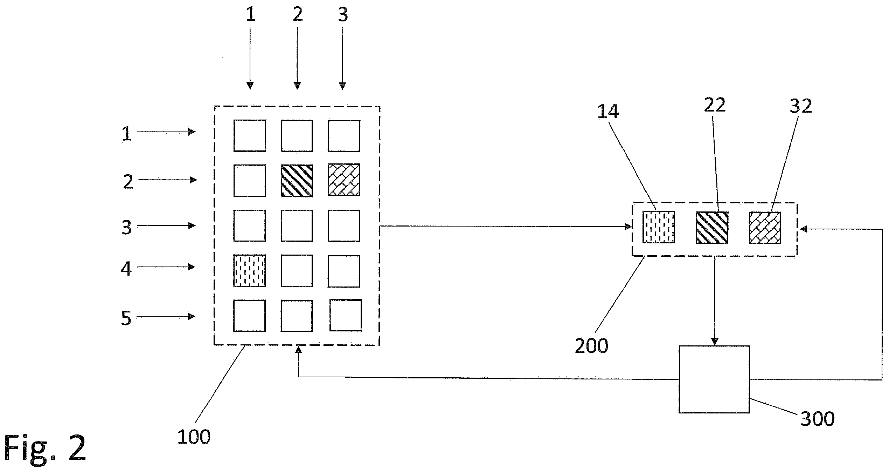

Der Simulationsprozess ist in Figur 2 schematisch dargestellt. 100 bezeichnet die Bibliothek mit entsprechenden Daten zu einer Reihe von Funktionssegmenten, die im gezeigten Beispiel matrixförmig aufgebaut ist. Aus dieser Bibliothek 100 können entweder anhand einer bereits vorhandenen Holzverarbeitungsanlage 400 (vgl. Fig. 1) die in der Bibliothek 100 gespeicherten Daten von in der Holzverarbeitungsanlage 400 vorhandenen Funktionssegmenten als virtuelle Holzverarbeitungsanlage 200 kombiniert werden. Anschließend erfolgt ein Simulationsprozess, der etwa das Durchlaufverhalten von Werkstücken durch die gesamte virtuelle Holzverarbeitungsanlage 200 simuliert. Dazu ist eine Simulationseinheit 300 vorgesehen, die die entsprechenden Berechnungen und Auswertungen durchführt. Ergebnisse der Simulation können entweder genutzt werden, um etwa die Auswahl und/oder Anordnung der einzelnen Funktionssegmente 14, 22, 32 zu verändern oder/und die aus dem Simulationsprozess gewonnenen Erkenntnisse über das Verhalten der einzelnen Funktionssegmente 14, 22, 32 in der Bibliothek 100 entsprechend abzuspeichern, sodass auf diese dann aktualisierten Daten auch in Zukunft zurückgegriffen werden kann. Funktionssegmente einer Holzverarbeitungsanlage können zum Beispiel Bearbeitungsvorrichtungen, Transportvorrichtungen Manipulationsvorrichtungen, Puffervorrichtungen oder Zuführ- oder Entnahmevorrichtungen sein. Alle diese Funktionssegmente haben charakteristische Eigenschaften, die die Verweilzeit des Werkstücks innerhalb des entsprechenden Funktionssegments betreffen. Anhand dieser charakteristischen Eigenschaften, die als Daten zu dem jeweiligen Funktionssegment in der Bibliothek 100 abgespeichert sind, kann beispielsweise anhand eines konkreten Werkstücks vorhergesagt werden, welche Zeitdauer zwischen dem Eintritt des Werkstücks in das jeweilige Funktionssegment und dem Austritt des Werkstücks aus dem jeweiligen Funktionssegment vergeht. Anhand solcher Erkenntnisse kann man beispielsweise die Werkstückzuführung am Eingang der Holzverarbeitungsanlage so regeln, dass es innerhalb der Holzverarbeitungsanlage zu keinen Störungen bzw. Kollisionen von Werkstücken kommt. Beispielsweise kann der Abstand, mit welchem die Werkstücke nacheinander aufgegeben werden, auf diese Weise im Simulationsprozess optimiert und dann in einer realen Anlage praktiziert werden.

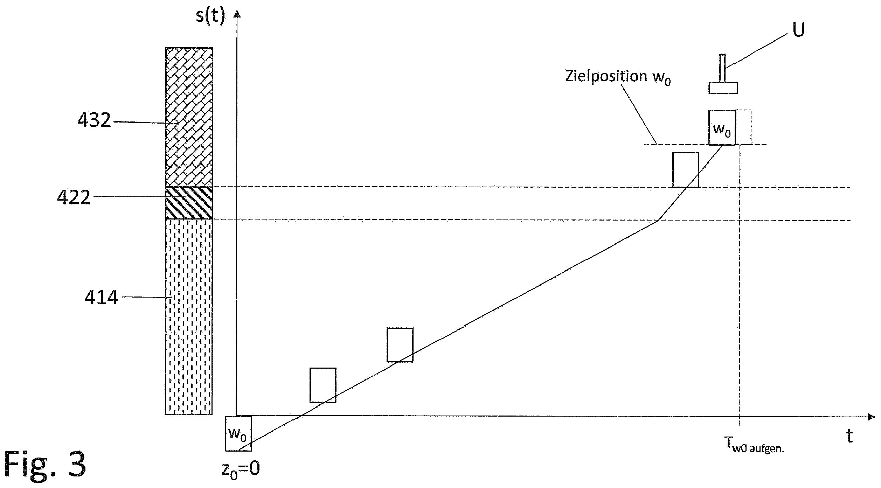

In den Figuren 3 bis 5 ist anhand eines Beispiels zur Bestimmung eines Minimalabstandes zwischen zwei aufeinanderfolgenden Werkstücken erläutert, wie anhand von Funktionssegmenten zusammengestellte Holzverarbeitungsmaschinen simuliert und daraus der entsprechende Minimalabstand bestimmt werden kann.

In einem Bereich vor der Maschine, in diesem Fall vor dem ersten Funktionssegment 414, werden zu bearbeitende Werkstücke $W_k$ aufgereiht bzw. vorgehalten, wobei k die laufende Werkstücknummer angibt (0 bezeichnet das erste Werkstück, 1 das folgende usw.). Die Werkstücke $W_k$ werden z. B. von einer Schranke oder dergl. unmittelbar vor der Maschine bzw. dem ersten Funktionssegment 414 derselben angehalten.

Je nach Größe der zu fahrenden Lücke zum vorausfahrenden Werkstück ($W_{k-1}$) wird die Schranke geöffnet, um das nächste Werkstück ($W_k$) in die Maschine bzw. das erste Funktionssegment 414 einfahren zu lassen. Im ersten Funktionssegment werden die Werkstücke mit einer Geschwindigkeit $v_1$ bewegt.

Ein Werkstück beschleunigt auf $v_2$, wobei bevorzugt ($v_2 > v_1$) gilt, sobald es mit der Hinterkante (HK) das erste Funktionssegment 414 verlassen hat. Im in Figur 3 bis 5 dargestellten Ausführungsbeispiel fährt das Werkstück $W_k$ dann über ein zweites Funktionssegment 422, bei welchem es sich im gezeigten Beispiel um einen Auslauftransport handelt, und anschließend je nach Bearbeitungsphase zu einem weiteren Funktionssegment 432, zum Beispiel einem Aufnahmetransport, zu einer bestimmten Zielposition darin, an der das betreffende Werkstück z. B. von einem Umsetzer U aufgenommen werden kann.

Der Minimalabstand zwischen zwei Werkstücken $W_k$ wird maßgeblich durch eine Reihe von Randbedingungen oder Vorgaben bestimmt, die eingehalten werden müssen. Solche Randbedingungen können z. B. eine oder mehrere der Folgenden sein:

1. Das Funktionssegment 414 benötigt immer eine Mindestlücke von mindestens X mm.

2. Je nach Bearbeitungsphase des letzten Werkstücks wird eine bestimmte Zeitspanne benötigt, bis ein Aufnahmetransport 432, z. B. ein Portal oder dergl., das Werkstück abgelegt hat und ein nachfolgendes Werkstück wieder vom Aufnahmetransport 432 aufgenommen werden kann. Idealerweise erreicht das aufzunehmende Werkstück genau dann die Zielposition, wenn der Umsetzer U gerade wieder aufnahmebereit wird.

3. Ein Werkstück W$k$ darf erst dann die Aufnahmetransporte 432 befahren, wenn sie freigegeben sind. Freigegeben sind sie, wenn a) das letzte Werkstück $W_k$ aufgenommen wurde oder/und b) das letzte Werkstück W$k$ seine Zielposition erreicht hat und mit dem aktuellen Werkstück ein Paar bildet.

4. Fährt ein Werkstück $W_k$ von dem Funktionssegment mit der Geschwindigkeit $v_1$ auf einen Auslauftransport 422, bevor das vorauslaufende Werkstück $W_{k-1}$ diesen Auslauftransport 422 mit der Geschwindigkeit $v_2$ verlassen hat, wird das Werkstück $W_{k-1}$ ebenfalls wieder auf $v_1$ abgebremst, bis es selbst den Auslauftransport 422 oder das aktuelle Werkstück $W_k$ das Funktionssegment 414 verlassen hat. Es kann also auch die Restriktion aufgestellt werden, dass das vorauslaufende Werkstück $W_{k-1}$ die erste Sektion 422 des Auslauftransports verlassen haben muss, sobald das aktuelle Werkstück $W_k$ aus dem Funktionssegment 414 herausragt.

Diejenige Restriktion, die die meiste Zeit und damit bei vorgegebenen Vorschubgeschwindigkeiten die größte Lücke verlangt, bestimmt somit den minimalen zulässige Abstand zweier aufeinander folgender Werkstücke.

Mathematisch kann dies beispielsweise wie folgt ausgedrückt werden: Die nachstehende Funktion beschreibt den Streckenverlauf sk(t) eines k-ten Werkstücks $W_k$ zwischen dem Einlauf in Funktionssegment 414 und der Aufnahme durch einen Aufnahmetransport 432 oder Umsetzer U in Abhängigkeit von der Zeit t:

$$s_k(t) \begin{cases} v_1(t - z_k) - L_k & , & z_k \leqq t < T_c + z_k \\ v_2(t - z_k - T_c) + S_c & , T_c + z_k \leqq t \leqq ZielPos_k \end{cases} \quad T_c = \frac{S_c + L_k}{v_1}$$

Dabei definiert die obere Zeile die Zeitspanne $T_c$ in dem Funktionssegment 414, die untere den weiteren Verlauf bis zum Erreichen der Zielposition.

$v_1$: Durchlaufgeschwindigkeit in Funktionssegment 414
$v_2$: Geschwindigkeit am Auslauftransport 422 und Aufnahmetransport 432
$z_k$: Startzeit von $w_k$
$L_k$: Durchlauflänge von $w_k$
$S_c$: Durchlaufene Strecke in Funktionssegment 414.

Figur 3 zeigt den Streckenverlauf so(t) eines ersten Werkstücks mit der Startzeit $z_0$=0.

Der Umsetzer U am Aufnahmetransport 432 ist aufnahmebereit und nimmt das Werkstück $W_0$ unmittelbar nach Erreichen der Zielposition auf. Durch Gleichsetzen der Streckenfunktion so(t) mit der Zielposition, sowie entsprechender Umformung berechnet sich $T_{w0}$ aufgenommen, also die Zeitdauer, die das Werkstück W0 von der Startposition bei z0=0 bis zur Zielposition unterwegs ist, wie folgt :

$$T_{w0}\ aufgen. = z_0 + \frac{S_c + L_0}{v_1} + \frac{ZielPos_0}{v_2}$$

Für das folgende Werkstück muss nun für alle maßgeblichen, insbesondere alle oben erwähnten, Restriktionen ein optimales $z_1$ (Startzeit für $W_1$) berechnet werden. Von den Ergebnissen muss das größte $z_1$ gewählt werden, damit alle Restriktionen eingehalten werden können.

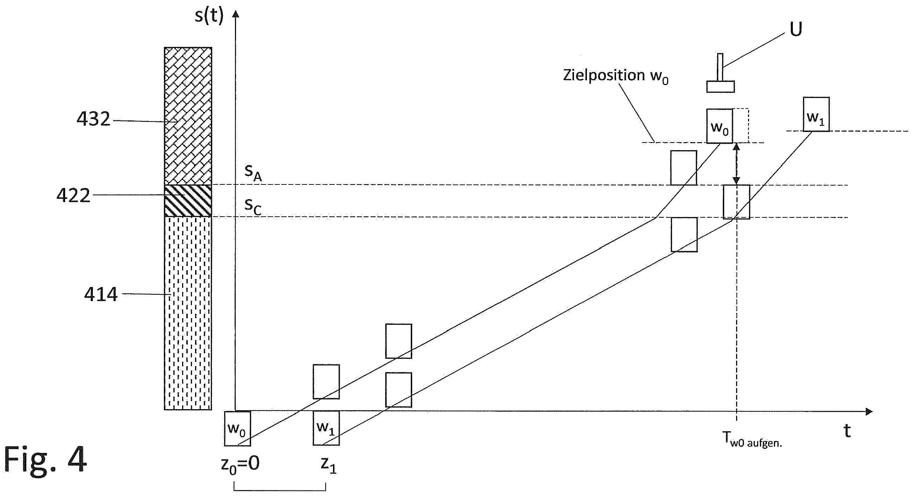

Im Beispiel der Figur 4 bestimmt die Restriktion Nr.3a oben den Abstand zwischen $W_0$ und $W_1$ mit der Startzeit

$$z_1 = T_{w0}\ aufgen. - \frac{S_c + L_1}{v_1} - \frac{S_A - L_1}{v_2}$$

und entsprechend den Abstand d($W_0$, $W_1$) zwischen einander zugewandten Werkstückkanten

$$d(w_0, w_1) = v_1 \cdot (z_1 - z_0) - L_0$$

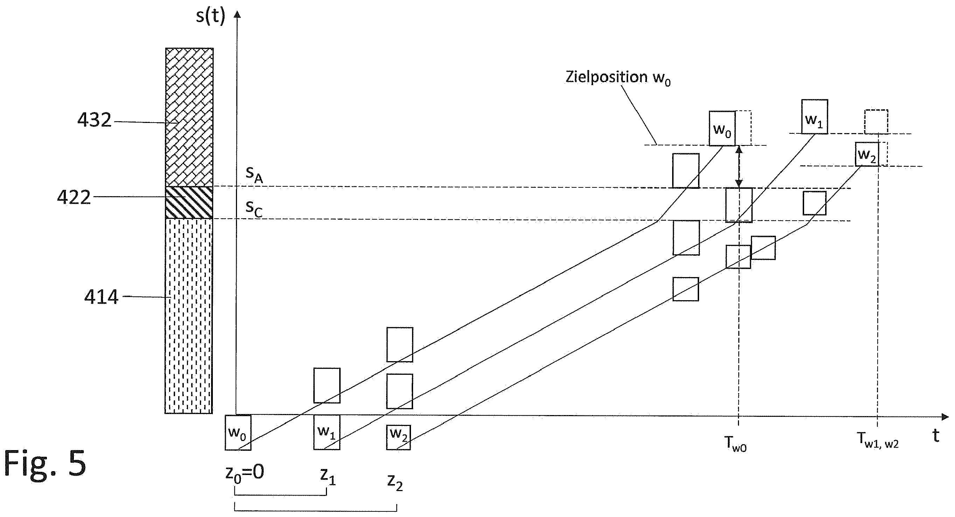

Entsprechend zeigt Figur 5 wie ein drittes Werkstück $W_2$ in die Anlage eingebracht wird, welches mit dem Werkstück $W_1$ ein Paar bildet. Der Abstand zwischen $W_1$ und $W_2$ wird im gezeigten Beispiel durch die Taktzeit des Umsetzers U bestimmt, die systemspezifisch sind, (Restriktion Nr.2):

$$z_2 = T_{Portal\ bereit} - \frac{S_c}{v_1} - \frac{ZielPos_2}{v_2}$$

Aufgrund von Reaktions- oder Ansprechzeiten verwendeter Sensoren, insbesondere bei Lichtschranken, die am Einlauf in die Maschine verwendet werden, können je nach Beschaffenheit feste Offset-Werte zu den wie oben berechneten Minimalabständen hinzuaddiert werden.

**Patentansprüche**

1. Verfahren zur Prozessoptimierung von Holzverarbeitungsanlagen (400), bei welchem eine Holzverarbeitungsanlage (400) durch Auswählen von Funktionssegmenten (414, 422, 432) vorkonfiguriert wird, die von einem Werkstück (10) durchlaufen werden können, wobei jedes Funktionssegment ein Element aus folgender Gruppe ist:

    i) Bearbeitungsvorrichtung,
    ii) Transportvorrichtung,
    iii) Manipulationsvorrichtung,

iv) Puffervorrichtung,
v) Zuführ-/Entnahmevorrichtung,

wobei folgende Schritte ausgeführt werden:

a) Bereitstellen einer Bibliothek (100) mit für jedes der Funktionssegmente (414, 422, 432) repräsentativen Informationen (14, 22, 32) über das Verhalten, insbesondere über die Verweilzeit, des Werkstücks (10) im jeweiligen Funktionssegment (414, 422, 432),
b) Auswählen der für die Funktionssegmente (414, 422, 432) repräsentativen Informationen (14, 22, 32);
c) Simulieren eines Werkstücktransports durch die die Holzverarbeitungsanlage (400) bildenden Funktionssegmente (414, 422, 432) anhand von einer Bibliothek mit gespeicherten Daten über das Verhalten von Werkstücken (10) beim Durchlauf durch Funktionssegmente (414, 422, 432) und Erzeugen von Simulationsdaten;
d) Ermitteln optimierter Prozessparameter zum Betrieb der aus den Funktionselementen (414, 422, 432) gebildeten Holzverarbeitungsanlage (400).

2. Verfahren nach Anspruch 1, bei welchem folgende Schritte ausgeführt werden:

e) Konzipieren einer noch zu bauenden Holzverarbeitungsanlage (400) und
f) Auslegen der Holzverarbeitungsanlage (400) auf den zu erwartenden Betrieb.

3. Verfahren nach Anspruch 1 oder 2,
**dadurch gekennzeichnet,**
**dass** die optimierten Prozessparameter in einer Speicherein-richtung gespeichert werden.

4. Verfahren nach einem der vorigen Ansprüche,
**dadurch gekennzeichnet,**
**dass** aufgrund der in Schritt d) ermittelten Prozessparameter einer aus den Funktionssegmenten (414, 422, 432) ausgebildeten Holzverarbeitungsanlage (400) die Förderung von Werkstücken (10) durch die Anlage gesteuert wird.

5. Verfahren nach Anspruch 4,
**dadurch gekennzeichnet,**
**dass** in Schritt d) als Prozessparameter ein minimaler Abstand zweier aufeinander folgender Werkstücke (10) ermittelt wird.

6. Verfahren nach Anspruch 4,
**dadurch gekennzeichnet,**
**dass** in Schritt d) als Prozessparameter Werte ermittelt werden, die der Optimierung der Durchsatzmenge aufeinander folgender Werkstücke (10) oder Werkstückfolgen dienen.

7. Verfahren nach Anspruch 4,
**dadurch gekennzeichnet,**
**dass** bei der Steuerung der Förderung von Werkstücken (10) durch die Holzverarbeitungsanlage (400) eine Anpassung der Bearbeitungsparameter auf Grundlage der Werkstückparameter erfolgt.

Fig. 1

Fig. 2

**Fig. 3**

Fig. 4

Fig. 5

**EP 4 113 232 A1**

Europäisches Patentamt
European Patent Office
Office européen des brevets

# EUROPÄISCHER RECHERCHENBERICHT

**Nummer der Anmeldung**

**EP 22 16 0203**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 110997 A1 (HOMAG PLATTENAUFTEILTECHNIK GMBH [DE]) 22. November 2018 (2018-11-22) * Absätze [0029] – [0068]; Abbildungen 1,2 * * Absätze [0071] – [0072]; Abbildung 3 * * Absätze [0083] – [0087] * ----- | 1-7 | INV. G05B19/418 H04L67/12 |
| A | BRACHT U ET AL: "DYNAMISCHE FABRIKPLANUNG. \TEIL 1: SYSTEMPLANUNG MIT CAD UND SIMULATION", ZWF ZEITSCHRIFT FUR WIRTSCHAFTLICHE FERTIGUNG UNDAUTOMATISIERUNG, CARL HANSER VERLAG. MUNCHEN, DE, Bd. 87, Nr. 6, 1. Juni 1992 (1992-06-01), Seiten 298-303, XP000270077, ISSN: 0947-0085 * Seite 301, linke Spalte, Zeile 15 – Seite 302, rechte Spalte, Zeile 2; Abbildungen 6,7 * ----- | 1-7 | |
| A | STANEK W ET AL: "SIMULATION IN DER FABRIKPLANUNG UND FERTIGUNGSSTEUERUNG. \SIMULATION IN FACTORY PLANNING AND PRODUCTION CONTROL", ZWF ZEITSCHRIFT FUR WIRTSCHAFTLICHE FERTIGUNG UNDAUTOMATISIERUNG, CARL HANSER VERLAG. MUNCHEN, DE, Bd. 88, Nr. 5, 1. Mai 1993 (1993-05-01), Seiten 226-228, XP000362654, ISSN: 0947-0085 * das ganze Dokument * ----- | 1-7 | RECHERCHIERTE SACHGEBIETE (IPC) H04L G05B |

Der vorliegende Recherchenbericht wurde für alle Patentansprüche erstellt

| Recherchenort | Abschlußdatum der Recherche | Prüfer |
|---|---|---|
| München | 28. Juli 2022 | Günther, Steffen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 4 113 232 A1

**ANHANG ZUM EUROPÄISCHEN RECHERCHENBERICHT**
**ÜBER DIE EUROPÄISCHE PATENTANMELDUNG NR.**                    EP 22 16 0203

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2022

| Im Recherchenbericht angeführtes Patentdokument | Datum der Veröffentlichung | Mitglied(er) der Patentfamilie | Datum der Veröffentlichung |
|---|---|---|---|
| DE 102017110997 A1 | 22-11-2018 | CN 110612490 A | 24-12-2019 |
| | | DE 102017110997 A1 | 22-11-2018 |
| | | EP 3625632 A1 | 25-03-2020 |
| | | WO 2018210816 A1 | 22-11-2018 |